# EUROPÄISCHE PATENTSCHRIFT

(11) **EP 2 829 744 B1**
(45) Veröffentlichungstag und Bekanntmachung des Hinweises auf die Patenterteilung: **28.03.2018**
(21) Anmeldenummer: 14001823.5
(22) Anmeldetag: 24.05.2014
(51) Int. Cl.: F15B 21/04, B60T 17/00, B01D 53/26

(54) **Luftbeschaffungsvorrichtung für ein Druckluftsystem eines Fahrzeugs und derartiges Druckluftsystem**
Air supply device for a compressed air system of a vehicle and such a compressed air system
Dispositif d'alimentation en air pour un système d'air comprimé d'un véhicule et un tel système d'air comprimé

(30) Priorität: 15.07.2013 DE 102013011785
(43) Veröffentlichungstag der Anmeldung: 28.01.2015
(73) Patentinhaber: WABCO GmbH, 30453 Hannover (DE)
(72) Erfinder: Diekmeyer, Heinrich, 30890 Barsinghausen (DE); Eggebrecht, Detlev, 30519 Hannover (DE); Feyerabend, Konrad, 30625 Hannover (DE); Ghafari, Mohammad-Reza, 30559 Hannover (DE); Hansen, Yves, 30519 Hannover (DE)

(56) Entgegenhaltungen:
- DE-A1-102010 018 949
- DE-A1-102010 031 306
- DE-A1-102011 121 493

## Beschreibung

Die Erfindung betrifft eine Luftbeschaffungsvorrichtung für ein Druckluftsystem eines Fahrzeugs, insbesondere eines Nutzfahrzeuges, sowie ein derartiges Druckluftsystem.

Luftbeschaffungsvorrichtungen in Druckluftsystemen von Fahrzeugen werden im Allgemeinen an den Kompressor des Fahrzeuges angeschlossen und dienen dazu, die vom Kompressor geförderte Luft zu trocknen, im Allgemeinen ergänzend zu filtern, und verschiedenen Verbraucherkreisen zur Verfügung zu stellen. Sie weisen einen Trocknerblock bzw. eine Luftaufbereitungseinrichtung auf, die von einem Kompressor geförderte Druckluft trocknet und an einen nachgeordneten Versorgungsbereich mit einer Mehrkreisschutzventileinrichtung zum Schutz mehrerer angeschlossener Verbraucherkreise ausgibt. Weiterhin ermöglichen Luftbeschaffungsvorrichtungen eine Regenerationsphase, in der ein Teil der geförderten Luft aus dem Versorgungsbereich unter Entspannung mittels einer Drossel durch die Trocknereinrichtung zurückgeführt wird, um die in der Trocknereinrichtung gesammelte Feuchtigkeit wieder durch einen Druckluftauslass auszugeben.

Neben Einkammer-Lufttrocknern mit lediglich einem Trockner sind auch Zweikammer-Lufttrockner bekannt, bei denen zwei Trockner parallel bzw. in parallelen Förderpfaden angeordnet sind, so dass alternativ ein erster Förderbetrieb durch den ersten Lufttrockner und ein zweiter Förderbetrieb durch den zweiten Lufttrockner ermöglicht wird. Bei derartigen Zweikammer- Lufttrocknern ist grundsätzlich eine Regeneration der nicht im Förderbetrieb befindlichen Trocknereinrichtungen möglich, während die andere Trocknereinrichtung fördert.

Die DE 33 02 451 A1 zeigt einen derartigen Mehrkammer-Lufttrockner; die Einstellung der unterschiedlichen Förderphasen und Regenerationsphasen erfolgt durch pneumatische Mehrwege-Ventile. Beim Fördern durch einen Trockner wird jeweils der andere Trockner regeneriert. Hierzu ist ein spezielles Magnetventil vorgesehen, das insbesondere unzulässige Zwischenzustände zwischen Belüftung und Entlüftung verhindern soll. Ein Ansatz derartiger spezieller Ventile ist jedoch im Allgemeinen mit hohen Herstellungskosten verbunden, insbesondere wegen der begrenzten Stückzahlen spezieller Ventile.

Die US 7 000 332 B1 beschreibt eine Gastrocknungsvorrichtung mit zwei Trocknerkartuschen. Hierbei erfolgt wechselseitig jeweils eine Regeneration einer Trocknerkartusche durch die andere Trocknerkartusche.

Aus der DE 10 2010 031306 A1 und der DE 10 2010 018949 A1 sind weitere Druckluftaufbereitungseinrichtungen mit zwei Lufttrocknerkartuschen bekannt.

Die EP 0 199 948 A1 beschreibt eine Lufttrocknungseinrichtung, bei der zwei Trockner in parallelen Luftpfaden für einen wechselseitigen Förderbetrieb angeordnet sind. Zwischen dem Kompressoranschluss und den beiden Trocknerpfaden ist ein 4/2-Wege-Ventil mit elektrischer Ansteuerung durch eine Steuereinrichtung vorgesehen. Dieses Wechselventil schließt jeweils einen Trockner an den Kompressoranschluss und den anderen Trockner an einen Druckluftauslass an. Regenerationsphasen werden durch Ausschalten des Kompressors und Ansteuerung eines 2/2-Wege-Ventils eingeleitet. Hierbei sind feste Zählzeiten zur Einleitung der Regenerationsphasen vorgesehen.

Der Erfindung liegt die Aufgabe zugrunde, eine Luftbeschaffungsvorrichtung zu schaffen, die ein effizientes Regenerieren der einzelnen Trockner ermöglicht, sowie ein Druckluftsystem mit einer derartigen Luftbeschaffungsvorrichtung.

Diese Aufgabe wird durch eine Luftbeschaffungsvorrichtung nach Anspruch 1 gelöst. Die Unteransprüche beschreiben bevorzugte Weiterbildungen. Weiterhin ist ein Druckluftsystem mit einer derartigen Luftbeschaffungsvorrichtung vorgesehen.

Somit ist ein elektrisch ansteuerbares Kompressor-Steuerventil zur direkten oder indirekten Ansteuerung des Kompressors vorgesehen.

Eine direkte Ansteuerung des Kompressors kann durch einen pneumatischen Steuereingang am Kompressor vorgesehen sein, insbesondere zum Ausschalten bei Druckluftbeaufschlagung. Eine indirekte Ansteuerung des Kompressors kann z. B. durch eine ansteuerbare Kompressorkupplung realisiert werden.

Somit können durch drei elektrisch ansteuerbare Pneumatikventile, insbesondere Magnet-Ventile, vielfältige Funktionen einer Zweikammer-Trocknervorrichtung realisiert werden, insbesondere mit geringem Hardware-Aufwand. Hierbei ist eine volle Funktionalität beider Trocknerpfade, sowohl der zwei Förderbetriebe als auch der Regenerationsbetriebe vorgesehen.

Somit können drei Funktionalitäten bedarfsgerecht gesteuert werden:
a) der Wechsel zwischen den beiden Förderbetrieben, d.h. durch den ersten oder zweiten Trockner bzw. Trocknerkartusche;
b) die Regeneration und
c) die Kompressorsteuerung.

Hierbei kann z. B. eine bevorzugte Nutzung einer Kartusche durch entsprechende Software-Steuerung erfolgen, so dass diese gezielt schneller verschmutzt und auszutauschen ist.
Die Schaltventileinrichtung zum Umschalten zwischen den Trocknern weist erfindungsgemäß zwei separate Schaltventile auf, die vorzugsweise als 3/2-Wege-Ventile ausgebildet sein können. Hierbei ist insbesondere eine Ausbildung als pneumatische 3/2-Schaltventile möglich, so dass diese im Wesentlichen gleich und somit kostengünstig ausbildbar sind.

Gemäß dieser Ausführung wird vorzugsweise bewusst eine unsymmetrische Ausbildung gewählt, bei der die Umschaltventile unterschiedlich angesteuert werden. So kann insbesondere das zweite Schaltventil zum Freigeben/ Sperren sowie Regenerieren des zweiten Lufttrockners in Abhängigkeit des Trocknerausgangs des ersten Trockners angesteuert werden; vorzugsweise ist der erste Trocknerausgang direkt an den pneumatischen Steuereingang des zweiten Umschaltventils angeschlossen. Das erste Schaltventil wird hingegen nicht von dem zweiten Trocknerausgang, sondern in Abhängigkeit eines Umschalt-Steuersignals geschaltet, das vorteilhafterweise direkt oder indirekt von der Steuereinrichtung ausgegeben wird. Diese Ansteuerung kann direkt durch Ausbildung des ersten Schaltventils mit elektrischem Steuereingang oder vorzugsweise auch mit einem vorgeschaltetem elektropneumatischen Vorschaltventil (Vorsteuerventil) erfolgen, das von der Steuereinrichtung elektrisch angesteuert wird und als Relaisventil zur Ausgabe eines pneumatischen Schaltdrucks dient.

Hierbei kann z.B. das Vorsteuerventil entweder im Grundzustand sperren und somit bei Aufnahme des elektrischen Umschalt-Steuersignals öffnen und den pneumatischen Steuerdruck an das zweite Schaltventil ausgeben. Alternativ hierzu kann das elektropneumatische Vorsteuerventil jedoch auch zur Invertierung des Steuersignals der Steuereinrichtung dienen, d.h. das erste Schaltventil ist im Grundzustand offen und wird durch das im unbetätigten Grundzustand sperrende elektropneumatische Vorsteuerventil bei dessen elektrischer Betätigung durchgeschaltet.

Bei einer derartigen Ausbildung wird zwar zugelassen, dass beim Starten des Kompressors zunächst gegebenenfalls in einer Anfangsphase kurzzeitig beide Trockner gleichzeitig im Förderbetrieb sind, bis der Trocknerausgang des ersten Lufttrockners die zweite Schalteinrichtung schaltet. Es wird jedoch erkannt, dass derartige Phasen relativ kurzzeitig und daher nicht relevant sind.

Erfindungsgemäß ist ein wahlweiser Betrieb möglich, insbesondere
- der erste oder zweite Förderbetrieb, bei Einsatz von mehr als zwei Lufttrockner auch entsprechend weitere Förderbetriebe bzw. Trocknerbetriebe,
- ein erster Regenerationsbetrieb des ersten Trockners oder ein zweiter Regenerationsbetrieb des zweiten Trockners sowohl bei Förderbetrieb durch jeweils den anderen Trockner als auch bei Ruhebetrieb (ausgeschalteter Kompressor) oder Leerlaufbetrieb des Kompressors möglich.

Ein erster und zweiter Regenerationsbetrieb sind auch bei ausgeschaltetem Fahrzeug und somit ausgeschaltetem Kompressor und noch im Vorratsbereich gespeicherter Druckluft möglich, um diese zur Regeneration zu nutzen (power down purge); hierzu ist das Regenerationsventil von der Steuereinrichtung anzusteuern. Ein derartiger power down purge- Betrieb ist erfindungsgemäß sukzessiv als erster und zweiter Regenerationsbetrieb, grundsätzlich aber auch parallel durch beide Trockner möglich.

Weiterhin wird aufeinanderfolgend ein erster und zweiter (oder zweiter und erster) Förderbetrieb ohne zwischengeschaltete oder parallel verlaufende Regenerationen ermöglicht; dies kann insbesondere auch zur Schubphasennutzung des Fahrzeugs dienen, um in Schubphasen den Kompressor an den Fahrzeug-Motor anzukoppeln und durch die Trockner Luft zu fördern, ohne in den Schubphasen Zeit für Regenerationen zu verlieren.

Auch ist es erfindungsgemäß möglich, gezielt die Trockner unsymmetrisch oder ungleichmäßig zu belasten, um z. B. eine Trocknerkartusche innerhalb eines Wartungsintervalls stärker zu belasten, so dass diese auszutauschen ist, die andere Trocknerkartusche hingegen - falls der Betrieb bzw. der Förderbedarf dies zulässt - nur wenig zu belasten, so dass diese gegebenenfalls nicht auszutauschen ist.

Erfindungsgemäß sind unterschiedliche Ausführungsformen möglich, bei denen z.B. die elektrisch angesteuerten Magnetventile wahlweise im Eingangsblock bzw. Lufttrocknerblock oder in einem nachgeschalteten Mehrkreisschutzventil-Block vorgesehen sind, wobei auch die Steuereinrichtung unterschiedlich angeordnet sein kann.

Gemäß einer Ausführungsform kann ein zusätzlicher Governor bzw. ein Governor-Steuerventil vorgesehen sein; dies bietet den Vorteil, dass auch bei Ausfall der Elektrik / Elektronik die Luftaufbereitung in einem "Notlauf"-Modus arbeitet, bei dem unter erhöhtem Luftverbrauch die Grundfunktionen Luftförderung und Trocknung gegeben sind. Im "Notlauf"-Modus sorgt der Governor vorzugsweise dafür, dass bei einem definierten Abschaltdruck im System der Kompressor abgeschaltet und die Regeneration eingeleitet wird.

Ein weiterer Vorteil liegt darin, dass der Kompressor abgeschaltet werden kann, ohne dass Druck aus der Leitung vom Kompressor und aus der Kartusche entweicht. Damit ist bei Wiedereinschalten des Kompressors die Leitung noch mit Druckluft befüllt, und es kann sofort ins System gefüllt werden

Weiterhin können Intervalle zum Kartuschen-Wechsel (Austausch nach Abnutzung) der ersten und zweiten Kartusche (in der Werkstatt) unabhängig voneinander sein. Es ist hierbei eine Diagnose oder Fahrermitteilung über den Kartuschenstatus möglich.

Die Erfindung wird im Folgenden anhand der beiliegenden Zeichnungen an einigen Ausführungsformen erläutert. Es zeigen:
- Fig. 1: ein elektropneumatisches Schaltschema eines Druckluftsystems gemäß einer ersten Ausführungsform mit am Mehrkreisschutzventil-Block angeschlossener Steuereinrichtung;
- Fig. 2: ein elektropneumatisches Schaltschema gemäß einer weiteren Ausführungsform;
- Fig. 3: ein elektropneumatisches Schaltschema gemäß einer dritten Ausführungsform;
- Fig. 4: ein elektropneumatisches Schaltschema gemäß einer vierten Ausführungsform;
- Fig. 5: ein elektropneumatisches Schaltschema eines Druckluftsystems gemäß einer fünften Ausführungsform mit Anordnung der Steuereinrichtung am Eingangsblock; und
- Fig. 6: ein elektropneumatisches Schaltschema eines Druckluftsystems gemäß einem Beispiel mit 4/2-Wegeventil.

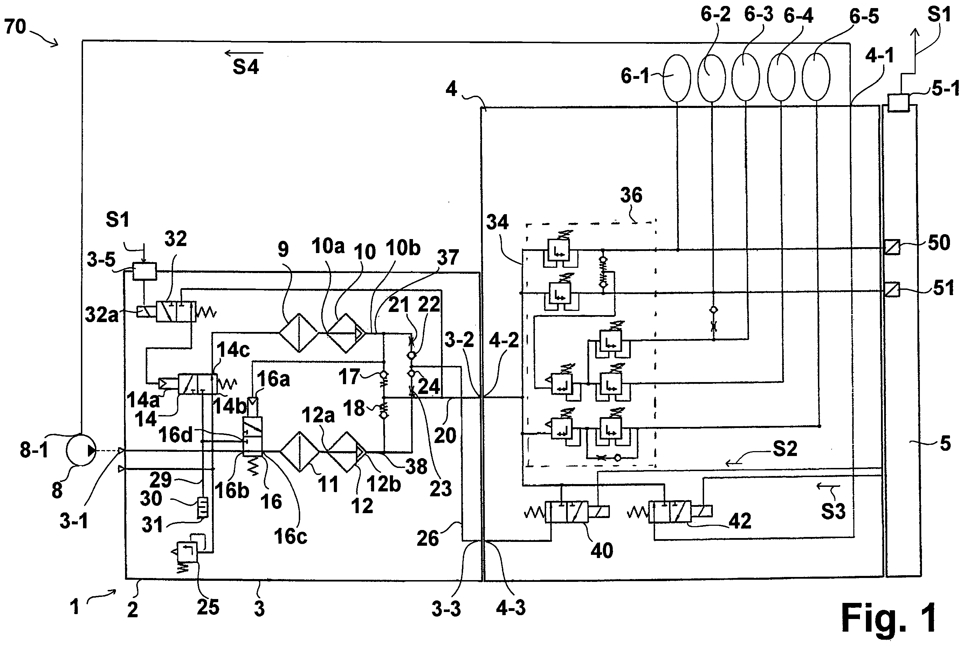

Ein in Fig. 1 gezeigtes Druckluftsystem 70 weist eine Luftbeschaffungsvorrichtung 1 auf, die aus einem Eingangsblock 3, einem Mehrkreisschutzventil-Block 4 sowie einer Steuereinrichtung 5 ausgebildet ist. Das Druckluftsystem 70 weist weiterhin an den Mehrkreisschutzventil-Block 4 der Luftbeschaffungsvorrichtung 1 angeschlossene Verbraucherkreise 6-1, 6-2, 6-3, 6-4, 6-5 und einen Kompressor 8 auf. Der Verbraucherkreis 6-1 kann z. B. für einen ersten Betriebsbremskreis, der Verbraucherkreis 6-2 für einen zweiten Betriebsbremskreis, 6-3 für ein Parkbremse/Anhängerbremssystem, 6-4, 6-5 und 6-6 für weitere Verbraucherkreise vorgesehen sein.

Der Kompressor 8 ist an einen pneumatischen Kompressoranschluss 3-1 des Eingangsblocks 3 angeschlossen. Der Eingangsblock 3 weist weiterhin pneumatische Anschlüsse 3-2 und 3-3 auf, die an entsprechende pneumatische Anschlüsse 4-2 und 4-3 des Mehrkreisschutzventil-Blocks 4 angeschlossen sind. Weiterhin ist ein pneumatischer Eingangsanschluss 8-1 des Kompressors 8 zum Abschalten des Kompressors 8 bei Druckluftbeaufschlagung (OFF-Signal) an einen Druckluftausgang 4-1 des Mehrkreisschutzventil-Blocks angeschlossen.

Der Eingangsblock 3 dient insbesondere als Trockner-Block und weist einen ersten Lufttrockner 10 mit vorgeschaltetem Filter 9 sowie einen zweiten Lufttrockner 12 mit vorgeschaltetem Filter 11 auf. Die Filter 9, 11 können hierbei auch in den Lufttrockner 10, 12 integriert sein, bzw. die Lufttrockner sind in üblicher Weise als Trocknerkartuschen mit Filter aufgebaut. Es können aber auch Trocknerkartuschen mit nachgeschaltetem Filter oder ohne Filter verwendet werden.

An den Kompressoranschluss 3-1 sind ein erstes Schaltventil 14 und ein zweites Schaltventil 16 geschaltet, die bei dieser Ausführungsform beide als pneumatisch angesteuerte 3/2-Wege-Ventile ausgebildet sind. An das erste Schaltventil 14 ist der erste Filter 9 angeschlossen. Entsprechend ist an das zweite Schaltventil 16 der zweite Filter 11 angeschlossen, so dass je nach Schaltstellung der Schaltventile 14, 16 der jeweilige Lufttrockner 10, 12 an den Kompressoranschluss 3-1 angeschlossen oder hiervon getrennt ist. An den Kompressoranschluss 3-1 ist weiterhin vorzugsweise ein Druckbegrenzer 25 angeschlossen, um - in an sich bekannter Weise - eine Belastung durch zu hohen Druck zu begrenzen. Die Lufttrockner 10, 12 sind in der dargestellten Ausführungsform mit ihren Trocknereingängen 10a, 12a somit an das jeweilige Filter 9, 11 angeschlossen. An ihre Trocknerausgänge 10b und 12b schließen sich ein erster Förderbereich 37 und ein zweiter Förderbereich 38 an, an die wiederum ein erstes Förder- Rückschlagventil 17 und ein zweites Förder-Rückschlagventil 18 angeschlossen sind, die bei Druckluftbeaufschlagung vom jeweiligen Trocknerausgang 10b und 12b aus öffnen und die Trocknerausgänge 10b, 12b an eine gemeinsame Förderleitung 20 legen, die an den pneumatischen Anschluss 3-2 des Eingangsblocks 3 angeschlossen ist.

Weiterhin ist an den ersten Trocknerausgang 10b über eine erste Drossel 21 ein erstes Regenerations-Rückschlagventil 22 derartig angeschlossen, dass es bei Druckluftbeaufschlagung vom ersten Förderbereich 37 bzw. vom ersten Trocknerausgang 10b sperrt und in Gegenrichtung öffnet und somit eine Regeneration des ersten Lufttrockners 10 ermöglicht. Entsprechend ist an dem zweiten Trocknerausgang 12b über eine zweite Drossel 23 ein zweites Regenerations-Rückschlagventil 24 in Sperrrichtung geschaltet, so dass es bei Druckluftbeaufschlagung vom zweiten Trocknerausgang 12b her sperrt. Die Regenerations-Rückschlagventile 22 und 24 sind an eine gemeinesame Regenerationsleitung 26 angeschlossen, die wiederum an den pneumatischen Anschluss 3-3 des Eingangsblocks 3 angeschlossen ist.

Der erste Trocknerausgang 10b des ersten Lufttrockners 10 ist weiterhin an den pneumatischen Steueranschluss 16a des zweiten Schaltventils 16 angeschlossen, so dass bei Luftbeaufschlagung des ersten Trocknerausgangs 10b zum einen das erste Förder-Rückschlagventil 17 öffnet und zum anderen das zweite Schaltventil 16 von der in Fig. 1 gezeigten Grundstellung in seine betätigte Stellung durchgeschaltet wird. In der gezeigten Grundstellung des zweiten Schaltventils 16 verbindet dieses seinen an den Kompressoranschluss 3-1 angeschlossenen Eingangsanschluss 16b mit seinem Ausgangsanschluss 16c, an den das zweite Filter angeschlossen ist. In seiner betätigten Stellung sperrt das zweite Schaltventil 16 seinen Eingangsanschluss 16b und legt seinen Ausgangsanschluss 16c (dritter Anschluss) an seinen Ablassausgang 16d, der an eine Ausgangsleitung 29 angeschlossen ist, die wiederum über einen Schalldämpfer 30 an einen Luftauslass 31 gelegt ist.

Das erste Schaltventil 14 ist mit seinem pneumatischen Steueranschluss 14a an den Ausgang eines elektropneumatischen Vorschaltventils 32 angeschlossen, das als elektropneumatisches 3/2-Wege-Ventil ausgebildet ist und in der gezeigten Ruhestellung den Eingang sperrt und den nachfolgenden Steueranschluss entlüftet, hingegen bei elektrischer Ansteuerung seines elektrischen Steueranschlusses 32a die Förderleitung 20 an den pneumatischen Steueranschluss 14a des ersten Schaltventils 14 legt. Ein elektrischer Steueranschluss 32a des Vorschaltventils 32 wird von der Steuereinrichtung 5 mit einem Umschalt-Steuersignal S1 angesteuert, das gemäß dieser Ausführungsform von einem Steuerausgang 5-1 der Steuereinrichtung 5 ausgegeben wird und von einem Signaleingang 3-5 des Eingangsblocks 3 aufgenommen wird. Grundsätzlich kann die Steuereinrichtung 5 auch direkt an den Eingangsblock 3 gesetzt werden. Weiterhin ist es möglich, alternativ zu der Verwendung des pneumatischen Vorschaltventils 32 das erste Schaltventil 14 mit einem elektrischen Steueranschluss 14a auszubilden, der dann direkt von dem Umschalt- Steuersignal S1 angesteuert wird. In der gezeigten Grundstellung verbindet das erste Schaltventil 14 seinen an den Kompressoranschluss 3-1 angeschlossenen ersten Anschluss 14b mit seinem Ausgangsanschluss 14c, der an das erste Filter 9 angeschlossen ist. In seiner betätigten Stellung sperrt das erste Schaltventil 14 seinen ersten Eingangsanschluss 14b und legt seinen Ausgangsanschluss 14c (dritter Anschluss) wiederum über den Schalldämpfer 30 an den Druckluftauslass 31.

Im Mehrkreisschutzventil-Block 4 ist ein Versorgungsleitungsbereich 34 über den Druckluftanschluss 4-2 des Mehrkreisschutzventil-Blocks 4 und den entsprechenden pneumatischen Anschluss 3-2 des Eingangsblocks an die Förderleitung 20 angeschlossenen. An dem Versorgungsleitungsbereich 34 sind über eine Mehrkreisschutzventil-Anordnung 36, die als solche bekannt ist und im Wesentlichen aus Überströmventilen, Druckbegrenzungsventilen und Rückschlagventilen sowie einer Drossel ausgebildet ist, die verschiedenen Verbraucherkreise 6-1 bis 6-5 angeschlossen. Weiterhin sind an den Versorgungsleitungsbereich 34 ein Regenerationsventil 40 und ein Kompressor-Steuerventil 42 angeschlossen. Beide Ventile 40, 42 sind als elektropneumatische 3/2-Wege-Ventile ausgebildet, die durch Steuersignale S2, S3 von der Steuereinrichtung 5 angesteuert werden. In seiner gezeigten Grundstellung sperrt das Regenerationsventil 40 den Versorgungsleitungsbereich 34. Bei Ansteuerung durch ein Regenerations-Steuersignal S2 von der Steuereinrichtung 5 schaltet das Regenerationsventil 40 durch und verbindet in seiner betätigten Stellung den Versorgungsleitungsbereich 34 mit dem Druckluftanschluss 4-3 des Mehrkreisschutzventil-Blocks 4, der somit über den entsprechenden pneumatischen Anschluss 3-3 des Eingangsblocks 3 an die Regenerationsleitung 26 angeschlossen wird. Entsprechend verbindet das Kompressor-Steuerventil 42 bei Ansteuerung durch das elektrische Kompressor-Steuersignal S3 den Versorgungsleitungsbereich 34 an den Druckluftausgang 4-1, so dass der Kompressor 8 über das pneumatische Steuersignal S4, d.h. Druckluftbeaufschlagung am pneumatischen Steuereingang 8-1 ausgeschaltet wird bzw. in eine Leerlaufstellung ohne Druckluftförderung geschaltet wird.

Nachfolgend werden die verschiedenen Betriebsmodi und Einstellungen der Luftbeschaffungsvorrichtung 1 der Fig. 1 beschrieben. In der gezeigten Grundstellung der Fig. 1 ist zunächst der Kompressor 8 eingeschaltet und beaufschlagt somit den Kompressoranschluss 3-1 mit Druckluft. Somit wird zunächst die Druckluft durch das geöffnete erste Schaltventil 14 und das geöffnete zweite Schaltventil 16 jeweils zu den Filtern 9, 11 und durch die Lufttrockner 10, 12 gefördert. Somit sind zunächst beide Lufttrockner 10, 12 im Förderbetrieb. Über den ersten Trocknerausgang 10b wird jedoch nachfolgend Druck auch auf den angeschlossenen pneumatischen Steuereingang 16a des zweiten Schaltventils 16 gelegt, so dass dieses durchgeschaltet wird und seinen Eingangsanschluss 16b sperrt. Somit wird der zweite Lufttrockner 12 nachfolgend über die Ausgangsleitung 29, den Schalldämpfer 30 und den Luftauslass 31 entlüftet. Druckluft wird jedoch weiterhin über den ersten Lufttrockner 10 und das erste Förder-Rückschlagventil 17 auf die Förderleitung 20 und somit auf den Versorgungsleitungsbereich 34 gelegt, so dass die Luftbeschaffungsvorrichtung 1 in einem ersten Förderbetrieb ist und entsprechend die angeschlossenen Verbraucherkreise 6-1 bis 6-5 mit Druckluft versorgt. Das Regenerationsventil 40 und das Kompressorventil 42 sperren zunächst. Die Regenerationsleitung 26 ist drucklos. Es liegt der Zustand: S1= 0, S2=0, S3=0 (Kompressor an) vor.

Im ersten Förderbetrieb erfolgt somit keine Druckluftförderung über den zweiten Trockner 12. Es ist jedoch im ersten Förderbetrieb, d.h. bei S1=0, S3=0, eine zweite Regeneration möglich, d.h. S1=0, S3=0, S2=1: Indem S2=1 ausgegeben wird, schaltet das zweite Regenerationsventil 40 durch und legt den Druck des Versorgungsleitungsbereichs 34 über die Anschlüsse 4-3 und 3-3 auf die Regenerationsleitung 26 und somit an die Regenerations-Rückschlagventile 22 und 24, an deren anderer Seite jeweils der Druck des ersten bzw. zweiten Förderbereichs 37, 38 anliegt. Da im ersten Förderbetrieb der erste Förderbereich 37 unter dem Druck des Versorgungsleitungsbereichs 34 steht, öffnet das erste Regenerations-Rückschlagventil 22 nicht. Da der zweite Förderbereich 38 drucklos ist, öffnet das zweite Regenerations-Rückschlagventil 23. Da weiterhin das zweite Schaltventil 16 geschaltet ist und somit der zweite Trocknereingang 12a an die Ausgangsleitung 29 gelegt ist, wird der zweite Trockner 12 regeneriert und Luft über das zweite Regenerations-Rückschlagventil 24, die zweite Drossel 23, den zweiten Förderbereich 38, den zweiten Trockner 12 mitsamt Filter 11, das zweite Schaltventil 16 , die Ausgangsleitung 29 und den Schalldämpfer 30 an den Luftauslass 31 ausgegeben.

Die Steuereinrichtung 5 schaltet durch Ausgabe des Umschalt- Steuersignals S1, d.h. mit S1= 1, die Luftbeschaffungsvorrichtung 1 von dem ersten Förderbetrieb in einen zweiten Förderbetrieb um, bei dem die Luft über den zweiten Lufttrockner 12 statt den ersten Lufttrockner 10 gefördert wird.

Durch das Umschalt-Steuersignal S1 wird zunächst das pneumatische Vorschaltventil 32 durchgeschaltet, so dass es den Druck von der Förderleitung 20 und dem Versorgungsleitungsbereich 34 auf den pneumatischen Steuereingang 14a des ersten Schaltventils 14 legt. Der Versorgungsleitungsbereich 34 ist hierbei auch bei z.B. vorübergehend ausgeschaltetem Kompressor 8 durchweg mit hinreichendem Druck versorgt, gegebenenfalls auch über die Mehrkreisschutzventil- Anordnung 36 von den Verbraucherkreisen 6-1, 6-2 und 6-5. Das betätigte erste Schaltventil 14 sperrt somit seinen Eingangsanschluss 14b und legt den ersten Trocknereingang 10a über das erste Filter 9 und die Ausgangsleitung 29 an den Druckluftauslass 31. Somit wird der erste Förderbetrieb über den ersten Trockner 10 beendet. Da der erste Trocknerausgang 10b nunmehr drucklos ist, schaltet das zweite Schaltventil 16 in seine Grundstellung zurück , so dass der zweite Trocknereingang 12a über das Filter 11 und das geöffnete zweite Schaltventil 16 vom weiterhin fördernden Kompressor 8 mit Druckluft beaufschlagt wird. Somit findet ein zweiter Fördermodus statt, bei dem Druckluft über den zweiten Trockner 12, das zweite Förder-Rückschlagventil 18 auf die Förderleitung 20 gelegt wird. Es liegt der Zustand S1=1, S2=0, S3=0 (Kompressor an) vor. Somit findet auch noch keine erste Regeneration des ersten Trockners 10 statt, da in der Regenerationsleitung 26 kein Druck vorliegt.

Der zweite Förderbetrieb wird beendet, indem das Umschalt-Steuersignal S1 nicht mehr ausgegeben wird, und das Vorschaltventil 32 somit zurückschaltet, woraufhin auch das erste Schaltventil 14 in seine Grundstellung zurückschaltet, so dass der Trockner 10 wiederum mit Druckluft beaufschlagt wird und über seinen Trocknerausgang 10b das zweite Schaltventil 16 durchschaltet und somit den Förderbetrieb durch den zweiten Trockner 12 sperrt. Somit wird wiederum vom zweiten Förderbetrieb in den ersten Förderbetrieb umgeschaltet.

An die Steuereinrichtung 5 sind Drucksensoren 50, 51 angeschlossen bzw. als Teil der Steuereinrichtung 5 ausgebildet, die den Luftdruck z.B. in den Verbraucherkreisen 6-1 und 6-2 (z.B. Betriebsbremskreise I und II) messen. Wenn die Steuereinrichtung 5 erkennt, dass ein hinreichender Betriebsdruck vorliegt und somit der Förderbetrieb beendet werden kann, gibt sie das Kompressor-Steuersignal S3 aus, d.h. S3=1, so dass das Kompressor-Steuerventil 42 durchschaltet und den Druck im Versorgungsleitungsbereich 34 über den Anschluss 4-2 an den Steuereingang 8-1 des Kompressors 8 anlegt, was ein pneumatisches Steuersignal S4 darstellt.

Ein Ausschalten des Kompressors 8 ist sowohl aus dem ersten Förderbetrieb heraus als auch aus dem zweiten Förderbetrieb heraus möglich. Wenn der Kompressor 8 ausgeschaltet wird, liegt im ersten Förderbetrieb im ersten Förderbereich 37, d.h. am ersten Trocknerausgang 10b zunächst weiterhin Druck an, so dass das zweite Schaltventil 16 zunächst durchgeschaltet bleibt. Wenn im zweiten Förderbetrieb, d.h. bei vorliegendem Umschalt-Steuersignal S1=1 der Kompressor 8 ausgeschaltet wird, ist das pneumatische Vorschaltventil 32 weiterhin betätigt, so dass über den Druck auf der Förderleitung 20 weiter auch das erste Schaltventil 14 betätigt ist. Falls kein Regenerations-Steuersignal S2 ausgegeben wird, d.h. bei S3=1 (Kompressor aus), S1=1, S2=0, ist der erste Förderbereich 37 drucklos, so dass das zweite Schaltventil 16 in seiner Grundstellung bleibt.

Auch bei ausgeschaltetem Kompressor 8, d.h. S3=1, ist wahlweise die Durchführung keiner Regeneration, der ersten Regeneration des ersten Lufttrockners 10 oder der zweiten Regeneration des zweiten Lufttrockners 12 möglich. Indem das Regenerationsventil 40 nicht betätigt wird, d.h. bei S3=1 und S2 = 0, findet keine Regeneration statt, unabhängig ob S1=1 oder S1=0.

Bei S3=1, S1=0 und S2=1 wird der Druck des Versorgungsbereichs 34 über das geöffnete Regenerationsventil 40, die Regenerationsleitung 26 und das öffnende erste Regenerations-Rückschlagventil 22 an den ersten Förderbereich 37 gelegt, sodass das zweite Schaltventil 16 betätigt wird und den zweiten Trocknereingang 12a an die Ausgangsleitung 29 legt zur Durchführung einer zweiten Regeneration. Falls ohnehin schon Druck im ersten Förderbereich 37 vorlag (da z. B. vorher ein erster Förderbetrieb vorlag), öffnet gegebenenfalls das erste Regenerations-Rückschlagventil 22 nicht; dies ist für die sich letztlich einstellende Schaltstellung unerheblich.

Bei S3=1, S1=1 und S2=1 ist das erste Schaltventil 14 betätigt und somit der erste Trocknereingang 10a an die Ausgangsleitung 29 gelegt, so dass Druckluft von der Regenerationsleitung 26, das sich öffnende erste Regenerations-Rückschlagventil 22 und die erste Drossel 21 durch den ersten Trockner 10 für eine erste Regeneration fließt.

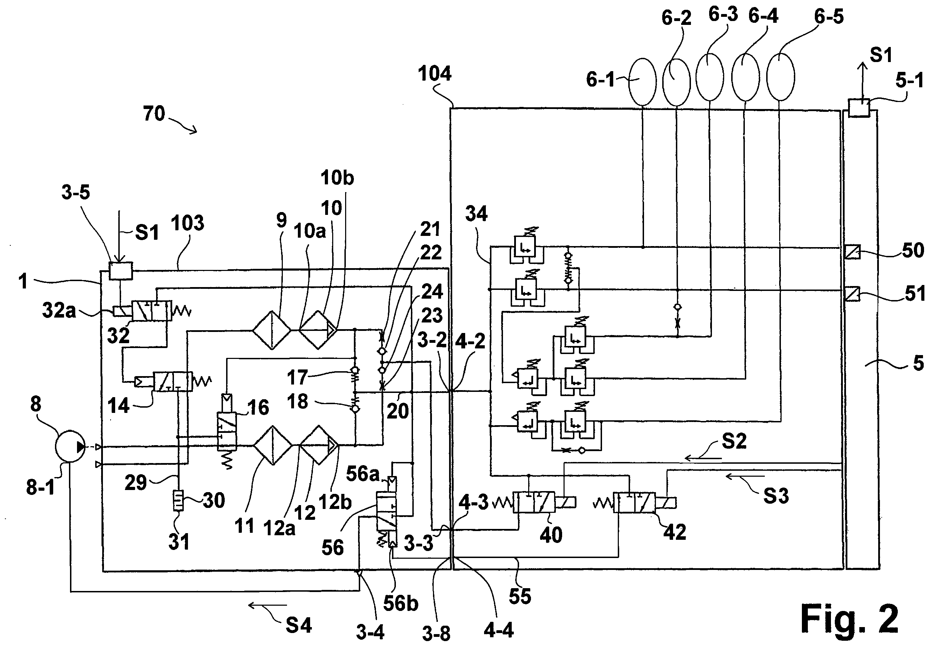

Bei der Ausführungsform der Fig. 2 sind gleiche oder ähnliche Komponenten und Elemente mit gleichen bzw. ähnlichen Bezugszeichen versehen. Der Anschaulichkeit halber ist nicht mehr das ganze Druckluftsystem 70 mit dem Kompressor 8 und den Verbraucherkreisen 6-1 bis 6-5 eingezeichnet, sondern lediglich die Luftbeschaffungsvorrichtung 1 mit Eingangsblock 103 und Mehrkreisschutzventil-Block 104.

Weiterhin liegt in Fig. 2 die Funktionsweise der Schaltventile 14, 16 und dem Regenerationsventil 40 und somit der erste und zweite Förderbetrieb und erste und zweite Regenerationsbetrieb mit den Signalen S1, S2 wie in Fig. 1 vor.

Ergänzend ist im Eingangsblocks 103 ein Governor-Steuerventil 56 vorgesehen, das als pneumatisches 3/2-Wege-Ventil mit zwei pneumatischen Steuereingängen 56a und 56b ausgelegt ist und mit einem Eingangsanschluss und einem pneumatischen Steuereingang 56a an die Förderleitung 20 angeschlossen ist. In seiner federvorgespannten Grundstellung sperrt es den Eingangsanschluss, in seiner betätigten Stellung legt es die Förderleitung 20 an einen Druckluftsteuerausgang 3-4 des Eingangsblocks 103, der zur Ansteuerung des Kompressors 8 dient. Entsprechend ist im Mehrkreisschutzventil-Block 104 kein Druckluftauslass 4-1 wie in der Ausführungsform der Fig. 1 vorgesehen.

Auch in Fig. 2 wird das Kompressor-Steuersignal S3 an das Kompressor-Steuerventil 42 ausgegeben. Dieses legt bei Betätigung (S3=1) jedoch den Druck des Versorgungsbereichs 34 an eine pneumatische Steuerleitung 55, die über einen Anschluss 4-4 des Mehrkreisschutzventil-Blocks 104 und einen Anschluss 3-8 des Eingangsblocks 103 an einen zweiten pneumatischen Steuereingang 56b des Governor-Steuerventils 56 angeschlossen ist.

Die Federvorspannung des Governor-Steuerventils 56 wird derartig gewählt, dass es bei hinreichend hohem Systemdruck im Versorgungsbereich 34 und somit in der Förderleitung 20 betätigt wird, um dann durchzuschalten und den Kompressor auszuschalten. Falls S3=0, d.h. kein Ausschalten des Kompressors vorgegeben wird, ist die Steuerleitung 55 drucklos. Das Governor-Steuerventil 56 wird bei normalem Systemdruck noch nicht betätigt; bei Erreichen eines Systemdrucks von z. B. 8,5 bar in der Förderleitung 20 wird der pneumatische Steuereingang 56a gegen die Federvorspannung betätigt, so dass der Systemdruck an den Druckluftsteuerausgang 3-4 gelegt wird und als OFF-Signal den Kompressor ausschaltet, bis der Systemdruck durch Druckluftverbrauch wieder unter den Schwellenwert fällt und somit das Governor-Steuerventil 56 wieder in seine Grundstellung zurück schaltet, so dass der Kompressor wieder fördert. Falls eine (erste oder zweite) Regeneration vorliegt, d.h. S2=1, kann dies grundsätzlich auch erfolgen; bei einer Regeneration wird jedoch der Systemdruck in der Förderleitung 20 bereits durch den Regenerations-Luftstrom begrenzt.

Bei Ausgabe eines Kompressor-Steuersignals S3, d.h. S3=1, schaltet das Kompressor-Steuerventil 42 und legt über die Steuerleitung 55 Druck auf den zweiten Steuereingang 56b des Governor-Steuerventils 56, so dass dieses auch bei höherem Systemdruck zurückschaltet und hierdurch der Kompressor jeweils eingeschaltet wird.

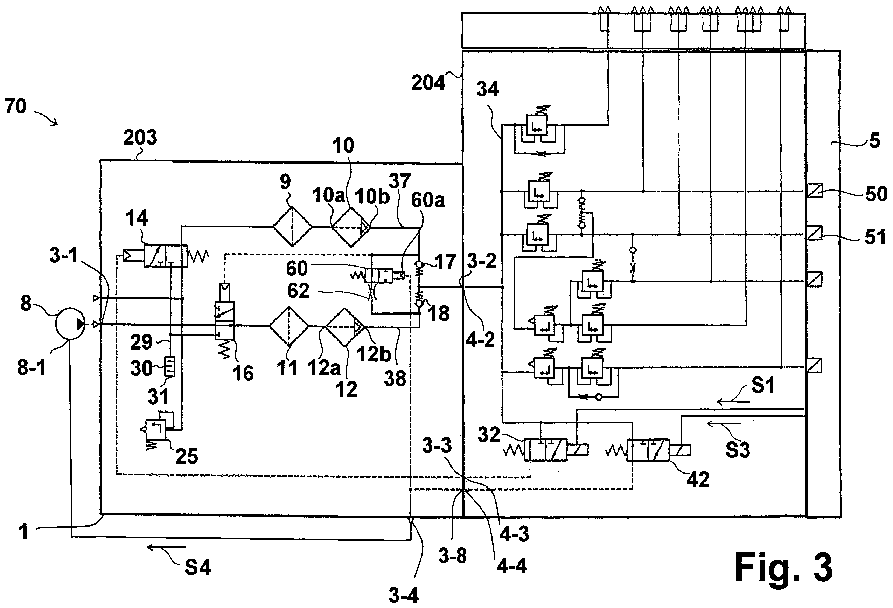

Fig. 3 zeigt eine weitere Ausführungsform, bei der statt der Regenerations-Rückschlagventile ein 2/2-Regenerations-Sperrventil 60 mit einem pneumatischen Steuereingang 60a neben eine gemeinsame Drossel 62 gesetzt ist. Der Pfad aus Regenerations-Sperrventil 60 und Drossel 62 ist zwischen die beiden Trocknerausgänge 10b und 12b und somit zwischen die Förderbereiche 37, 38 geschaltet, d.h. parallel zu dem Pfad aus den beiden Förder-Rückschlagventilen 17, 18. Im Grundzustand ist das Regenerations-Sperrventil 60 offen, so dass eine Regeneration durch Verbindung der Förderbereiche 37, 38 über die Drossel 62 wechselseitig im anderen Förderbetrieb erfolgen kann, d.h. im ersten Förderbetrieb eine zweite Regeneration und umgekehrt. Der pneumatische Steuereingang 60a des Sperrventils 60 wird von dem Kompressor-Steuerventil 42 über pneumatische Anschlüsse 4-4 und 3-8 angesteuert. Auch der Druckluftsteuerausgang 3-4 ist wiederum an das Kompressor-Steuerventil 42 angeschlossen, so dass der Kompressor bei S3=1 ausgeschaltet wird. Bei S3=1 wird das Regenerations-Sperrventil 60 betätigt, so dass nur in einem Förderbetrieb, nicht aber bei ausgeschaltetem Kompressor eine Regeneration erfolgen kann. Gemäß dieser Ausführungsform erfolgt eine Regeneration somit nur in den Förderphasen von einem Lufttrockner zu dem anderen. Das Vorschaltventil 32 ist hier im Mehrkreisschutzventil-Block 204 vorgesehen.

In Fig. 3, 4, 5 ist hierbei das zweite Schaltventil 16 bei gleicher Funktionalität wie in Fig. 1, 2 aufgrund eine versetzten Leitungsanordnung symmetrisch gespiegelt zu Fig. 1,2 dargestellt. Weiterhin sind die Darstellungen z. B. der Mehrkreisschutzventil-Blöcke 4, 104, 204, 304, 404, 504 zum Teil schematisch, wobei sich z. B. die Mehrkreisschutzventil-Blöcke 4, 304, 504 entsprechen.

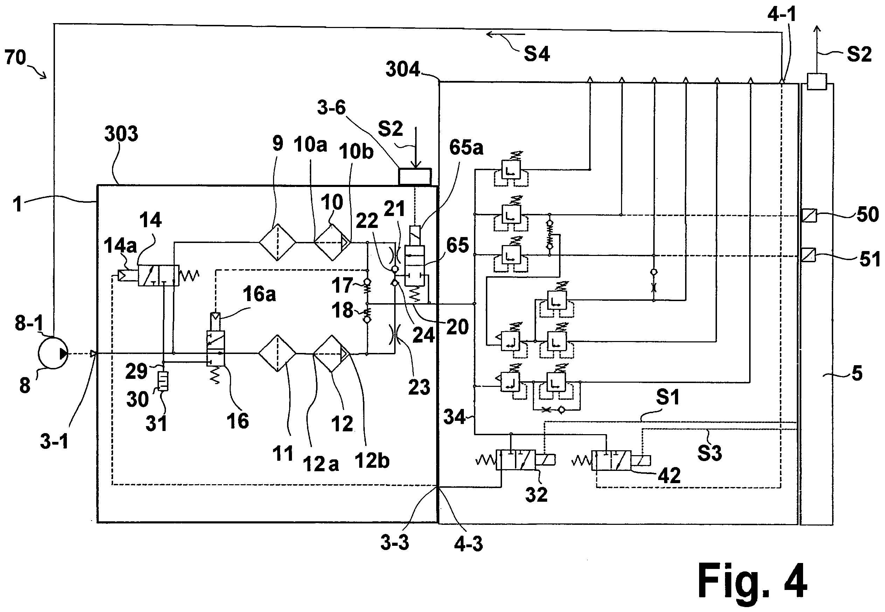

Bei der Ausführungsform der Fig. 4 ist wiederum der Mehrkreisschutzventil-Block 4 aus Fig. 1 vorgesehen. Anders als in der Ausführungsform der Fig. 1 ist hier jedoch ein 2/2-Wege-Sperrventil 65 im Eingangsblock 303 vorgesehen, dessen elektrischer Steuereingang 65a über einen elektrischen Signaleingang 3-6 vom Regenerationssignal S2 angesteuert wird. In der gezeigten Ruhestellung sperrt es und trennt somit die Regenerations-Rückschlagventile 22 und 24 von der Förderleitung 20. Entsprechend Fig. 1 sind Drosseln 21 und 23 hinter den Regenerations-Rückschlagventilen 22 und 24 vorgesehen. Bei Aufnahme des Regenerations-Steuersignals S2 werden somit beide Trocknerausgänge 10b und 12b von der Förderleitung 20 mit Regenerationsluft aus der Regenerationsleitung 26 beaufschlagt. Je nach dem, welchen Trocknereingang 10a, 12a die Ventile 14, 16 jeweils über den Schalldämpfer 30 an den Auslass 31 legen, erfolgt die Regeneration. Bei dieser Ausführungsform ist das pneumatische Vorschaltventil 32 im Mehrkreisschutzventil-Block 4 angeordnet; d.h. bei grundsätzlich gleichem Aufbau wie der Mehrkreisschutzventil-Block 4 aus Fig. 1 erfolgt hier ein andere Nutzung der Ventile. Bei Ansteuerung des pneumatischen Vorschaltventils 32 durch das Umschalt-Steuersignal S1 legt dieses den Versorgungsleitungsbereich 34 an den pneumatischen Steuereingang 14a des ersten Schaltventils 14, so dass die Regeneration des ersten Trockners 10 erfolgt, wenn gleichzeitig das Regenerations-Steuersignal S2 ausgegeben wird. Falls S1 nicht ausgegeben wird, d.h. S1=0, wird bei anliegendem Regenerations-steuersignal, d.h. S2=1, der Trocknerausgang 10b durch das geöffnete Regenerationssperrventil 65 von der Förderleitung 20 mit Regenerationsluft aus der Regenerationsleitung 26 beaufschlagt, so dass der an den Trocknerausgang 10b angeschlossene pneumatische Steuereingang 16a des zweiten Schaltventils mit Druck beaufschlagt ist und dieses durchschaltet, so dass es den zweiten Trocknereingang 12a an den Druckluftauslass 31 legt.

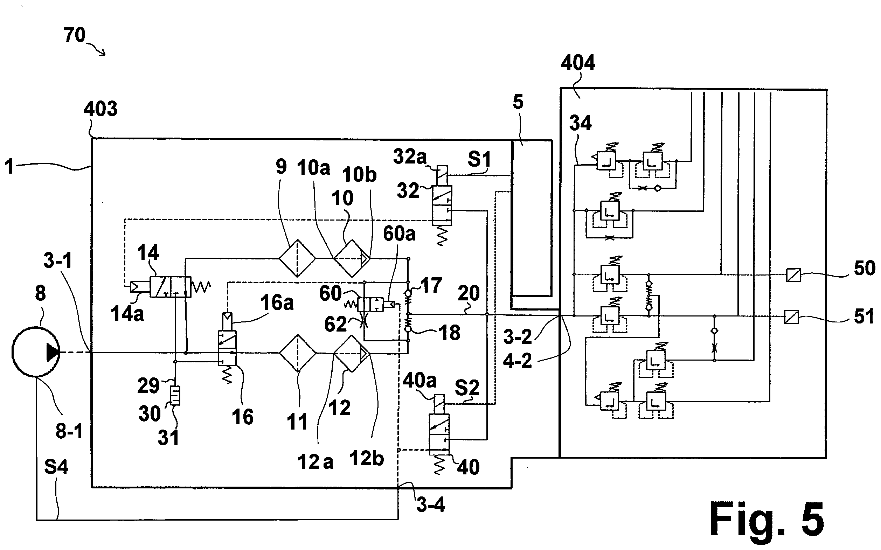

Bei der Ausführungsform der Fig. 5 sind im Mehrkreisschutzventil-Block 404 keine Magnetventile, sondern lediglich die Überströmventile und Rückschlagventile des Mehrkreisschutzventils vorgesehen und z.B. auch die Drucksensoren 50, 51. Die Steuereinrichtung 5 ist an den Eingangsblock 403 angeschlossen, in dem das Vorschaltventil 32 zur Aufnahme des Umschalt-Steuersignals S1 von der Steuereinrichtung 5 und zur Druckbeaufschlagung des pneumatischen Steuereingangs 14a des ersten Schaltventils 14 vorgesehen ist, weiterhin das auch als Regenerationsventil dienende Kompressor-Steuerventil 42, das bei Aufnahme des Regenerations-Steuersignals S2 von der gezeigten, sperrenden Ruhestellung wiederum durchschaltet und hierdurch die Förderleitung 20 sowie den Versorgungsleitungsbereich 34 auf den pneumatischen Steuereingang 60a des 2/2-Wege-Regenerations- Sperrventils 60 legt und dieses somit in seine sperrende Stellung schaltet; weiterhin wird der Druckluftsteuerausgang 3-4 des Eingangsblocks 403 mit Druckluft beaufschlagt. Die Funktionalität entspricht somit der Ausführungsform der Fig. 3, es sind jedoch die Ventile 32, 42 im Eingangsblock 403 vorgesehen und die Steuereinrichtung 5 an diesen angeschlossen.

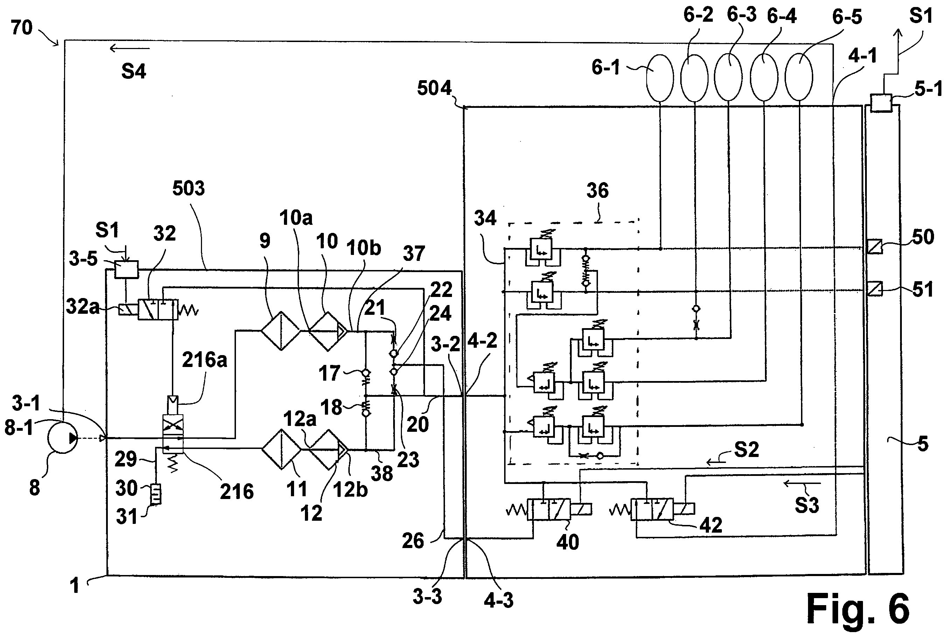

Fig. 6 zeigt ein Beispiel, bei dem statt der zwei 3/2- Wegeventile der Fig. 1 bis 5 im Eingangsblock 503 ein 4/2-Wege-Schaltventil 216 vorgesehen ist, dessen pneumatischer Steuereingang 216a an das elektropneumatische Vorschaltventil 32 angeschlossen ist. Das 4/2-Wege-Schaltventil 216 ersetzt somit die beiden Schaltventile 16, 14 der Fig. 1. Gegenüber z. B. der EP 199948 A1 unterscheidet sich auch diese Schaltung noch durch insbesondere das Kompressor- Steuerventil 42 im Mehrkreisschutzventil-Block 4, wodurch eine bedarfsgerechte Ansteuerung des Kompressors 8 und somit der Förderphasen ermöglicht ist. Weiterhin sind zwei Regenerationspfade mit jeweils einem Rückschlagventil 22, 24 und jeweils einer Drossel 21, 23 vorgesehen. Weiterhin ist bei sämtlichen Ausführungsformen eine bedarfsgerechte Ansteuerung der Regenerationsphasen möglich, statt der bekannten Einleitung nach festen Zählzeiten. Weiterhin sind der erste und zweite Regenerationsbetrieb auch bei ausgeschaltetem Fahrzeug und somit ausgeschaltetem Kompressor und mit noch im Vorratsbereich gespeicherter Druckluft möglich, um diese zur Regeneration zu nutzen (power down purge); hierzu ist das Regenerationsventil von der Steuereinrichtung anzusteuern. Ein derartiger power down purge- Betrieb ist erfindungsgemäß sukzessiv als erster und zweiter Regenerationsbetrieb möglich.

Somit können erfindungsgemäß unterschiedliche Ausführungsformen realisiert werden, mit unter anderem unterschiedlicher Ausbildung und Anordnung von Ventilen, z.B. Magnetventilen, lediglich im Mehrkreisschutzventil-Block oder auch lediglich im Eingangsblock oder gemischte Varianten.

### Bezugszeichenliste

- 1: Luftbeschaffungsvorrichtung
- 3, 103, 203, 303, 403, 503: Eingangsblock (Trocknerblock)
- 3-1: Kompressoranschluss des Eingangsblocks
- 3-2, 3-3, 3-4 3-5, 3-8: pneumatische Anschlüsse des Eingangsblocks
- 3-6: elektrischer Signaleingang des Eingangsblocks
- 4, 104, 204, 304, 404, 504: Mehrkreisschutzventil-Block
- 4-1: Druckluftausgang des Mehrkreisschutzventil-Blocks
- 4-2, 4-3, 4-4: pneumatische Anschlüsse des Mehrkreisschutzventil-Blocks
- 5: Steuereinrichtung
- 5-1: Steuerausgang
- 6-1, 6-2, 6-3, 6-4, 6-5: angeschlossene Verbraucherkreise
- 8: Kompressor
- 8-1: als pneumatischer Steuereingang des Kompressors 8
- 9: erster Filter
- 10: erster Lufttrockner
- 10a: Trocknereingang erster Lufttrockner
- 10b: Trocknerausgang erster Lufttrockner
- 11: zweiter Filter
- 12: zweiter Lufttrockner
- 12a: Trocknereingang zweiter Lufttrockner
- 12b: Trocknerausgang zweiter Lufttrockner
- 14: erstes Schaltventil
- 14a: pneumatischer Steueranschluss des ersten Schaltventils 4
- 14b: Eingangsanschluss des ersten Schaltventils 4
- 14c: Ausgangsanschluss des ersten Schaltventils 4
- 16: zweites Schaltventil
- 16a: pneumatischer Steueranschluss des zweiten Schaltventils 16
- 16b: Eingangsanschluss des zweiten Schaltventils 16
- 16c: Ausgangsanschluss des zweiten Schaltventils 16
- 16d: Ablassausgang des zweiten Schaltventils 16
- 17: erstes Förder- Rückschlagventil
- 18: zweites Förder-Rückschlagventil
- 20: gemeinsame Förderleitung
- 21: erste Drossel
- 22: erstes Regenerations-Rückschlagventil
- 23: zweite Drossel
- 24: zweites Regenerations-Rückschlagventil
- 25: Druckbegrenzer
- 26: Regenerationsleitung
- 29: Ausgangsleitung
- 30: Schalldämpfer
- 31: Druckluftauslass
- 32: elektropneumatisches Vorschaltventil
- 32a: elektrischer Steueranschluss des elektropneumatischen Vorschaltventils
- 34: Versorgungsleitungsbereich
- 36: Mehrkreisschutzventil-Anordnung
- 37: erster Förderbereich
- 38: zweiter Förderbereich
- 40: Regenerationsventil
- 42: Kompressor-Steuerventil
- 50,51: Drucksensoren
- 55: pneumatische Steuerleitung
- 56: Governor-Steuerventil
- 56a, 56b: pneumatische Steuereingänge des Governor-Steuerventils 56
- 60: 2/2-Regenerations-Sperrventil
- 60a: pneumatischer Steuereingang des Regenerations-Sperrventils 60
- 62: Drossel
- 65: 2/2-Wege-Sperrventil
- 65a: elektrischer Steuereingang
- 70: Druckluftsystem
- 216: 4/2-Wege-Schaltventil
- 216a: pneumatischer Steuereingang
- S1,S2, S3: Steuersignale
- S4: pneumatisches Steuersignal

## Patentansprüche

1. Luftbeschaffungsvorrichtung (1) für ein Druckluftsystem (70) eines Fahrzeuges, wobei die Luftbeschaffungsvorrichtung (1) aufweist:
einen Kompressoranschluss (3-1) zum Anschluss eines Kompressors (8),
eine erste Trocknereinrichtung (10) und eine zweite Trocknereinrichtung (12),
eine Schaltventileinrichtung (14, 16) zum Anschließen der ersten
Trocknereinrichtung (10) an den Kompressoranschluss (3-1) für einen ersten Förderbetrieb oder der zweiten Trocknereinrichtung (12) an den Kompressoranschluss (3-1) für einen zweiten Förderbetrieb,
einen Vorratsbereich (20, 34) zum Speichern oder Aufnehmen von durch die Trocknereinrichtungen (10, 12) geförderter Druckluft,
eine Regenerationsventileinrichtung (40, 22, 24) zum Regenerieren der Trocknereinrichtungen (10, 12) durch Verbinden des Vorratsbereichs (34) mit einem Trocknerausgang (10b, 12b) der ersten Trocknereinrichtung (10) oder zweiten Trocknereinrichtung (12),
wobei die Schaltventileinrichtung (14, 16) und die Regenerationsventileinrichtung (40, 22, 24) jeweils ein elektrisch ansteuerbares Magnetventil (32, 40) aufweisen, wobei die Luftbeschaffungsvorrichtung (1) ein elektrisch ansteuerbares Kompressor-Steuerventil (42) zur direkten oder indirekten Ansteuerung des Kompressors (8) aufweist, wobei die Schaltventileinrichtung (14, 16) ein erstes Schaltventil (14) und ein zweites Schaltventil (16) aufweist, wobei das erste Schaltventil (14) durch ein Umschalt-Steuersignal (S1) direkt oder indirekt betätigbar ist zum Sperren der ersten Trocknereinrichtung (10) vom Kompressoranschluss (3-1) und/oder zum Regenerieren der ersten Trocknereinrichtung (10) in einem ersten Regenerationsbetrieb, **dadurch gekennzeichnet, dass** das zweite Schaltventil (16) durch den Trocknerausgang (10b) der ersten Trocknereinrichtung (10) betätigbar ist zum Trennen der zweiten Trocknereinrichtung (12) vom Kompressoranschluss (3-1) und/oder zum Regenerieren der zweiten Trocknereinrichtung (12) in einem zweiten Regenerationsbetrieb.

2. Luftbeschaffungsvorrichtung (1) nach Anspruch 1, **dadurch gekennzeichnet, dass**
während des ersten Förderbetriebs ein zweiter Regenerationsbetrieb einstellbar oder nicht einstellbar ist, und
während des zweiten Förderbetriebs ein erster Regenerationsbetrieb einstellbar oder nicht einstellbar ist.

3. Luftbeschaffungsvorrichtung (1) nach Anspruch 1 oder 2, **dadurch gekennzeichnet, dass** ein Umschalt-Steuersignal (S1) ein elektrisches Steuersignal einer Steuereinrichtung (5) ist.

4. Luftbeschaffungsvorrichtung (1) nach einem der vorherigen Ansprüche, **dadurch gekennzeichnet, dass** sie einen Eingangsblock (3, 103, 203, 303, 403) mit den beiden Trocknereinrichtungen (12, 14) und der Schaltventileinrichtung (14, 16) sowie einen Mehrkreisschutzventil-Block (4, 104, 204, 304, 404) mit einer Mehrkreisschutzventil- Anordnung (36) zum Anschluss mehrerer Verbraucherkreise (6-1, 6-2, 6-3, 6-4, 6-5) an den Versorgungsbereich (34) aufweist, wobei ein Regenerationsventil (40) und ein Kompressor-Steuerventil (42) im Mehrkreisschutzventil-Block (4, 104, 204, 304, 404) angeordnet sind.

5. Luftbeschaffungsvorrichtung (1) nach Anspruch 4, **dadurch gekennzeichnet, dass** im Eingangsblock (203) lediglich pneumatisch angesteuerte Ventile vorgesehen sind.

6. Luftbeschaffungsvorrichtung (1) nach Anspruch 4, **dadurch gekennzeichnet, dass** im Eingangsblock (3, 103, 303) als elektrisches Mittel lediglich ein elektrisch angesteuertes Vorsteuerventil (32) zur Ansteuerung eines pneumatischen Steuereingangs (14a) des zweiten Schaltventils (14) vorgesehen ist.

7. Luftbeschaffungsvorrichtung (1) nach einem der vorherigen Ansprüche, **dadurch gekennzeichnet, dass** aufeinander folgend ein erster Förderbetrieb und ein zweiter Förderbetrieb ohne Regeneration durchführbar sind.

8. Luftbeschaffungsvorrichtung (1) nach einem der vorherigen Ansprüche, **dadurch gekennzeichnet, dass** an die Regenerationsventileinrichtung (40) zwei Regenerationspfade angeschlossen sind, wobei vor dem ersten Trocknerausgang (10b) eine erste Drossel (21) und ein erstes Rückschlagventil (22) und vor dem zweiten Trocknerausgang (12b) eine zweite Drossel (23) und ein zweites Rückschlagventil (24) angeordnet sind.

9. Luftbeschaffungsvorrichtung (1) nach Anspruch 1, **dadurch gekennzeichnet, dass** das erste Schaltventil (14) einen pneumatischen Steuereingang (14a) aufweist, der durch ein elektropneumatisches Vorschaltventil (32), insbesondere ein 3/2-Wege-Ventil, angesteuert wird, dessen elektrischer Steuereingang (32a) das Umschalt-Steuersignal (S1) der Steuereinrichtung (5) aufnimmt.

10. Luftbeschaffungsvorrichtung (1) nach Anspruch 1 oder 9, **dadurch gekennzeichnet, dass** sie ein zwischen dem ersten Trocknerausgang (10b) und dem Vorratsbereich (20, 34) vorgesehenes erstes Förder-Rückschlagventil (17) zum Öffnen im ersten Förderbetrieb und ein zwischen dem zweiten Trocknerausgang (12b) und dem Vorratsbereich (20, 34) vorgesehenes zweites Förder-Rückschlagventil (18) zum Öffnen im zweiten Förderbetrieb aufweist,
wobei zwischen dem ersten Trocknerausgang (10b) und dem ersten Förder-Rückschlagventil (17) ein erster Förderbereich (37) und zwischen dem zweiten Trocknerausgang (12b) und dem zweiten Förder-Rückschlagventil (18) ein zweiter Förderbereich (38) ausgebildet ist, wobei ein pneumatischer Steuereingang (16a) des zweiten Schaltventils (16) an den ersten Förderbereich (37) angeschlossen ist.

11. Luftbeschaffungsvorrichtung (1) nach einem der Ansprüche 1, 9 oder 10, **dadurch gekennzeichnet, dass** das erste Schaltventil (14) und das zweite Schaltventil (16) als 3/2-Wege-Ventile ausgebildet sind zum Verbinden des ersten oder zweiten Trocknereingangs (10a, 12a) mit entweder dem Kompressoranschluss (3.1) oder einer Ausgangsleitung (29) zu einem Luftauslass (31).

12. Luftbeschaffungsvorrichtung (1)) nach Anspruch 11, **dadurch gekennzeichnet, dass** das erste Schaltventil (14) und das zweite Schaltventil (16) in ihrer unbetätigten Grundstellung den Kompressoranschluss (3-1) jeweils an die nachgeschaltete Trocknereinrichtung (10, 12) anschließen und in ihrer betätigten Stellung die nachgeschaltete Trocknereinrichtung (10, 12) jeweils an die Ausgangsleitung (29) anlegen.

13. Druckluftsystem (70) mit einer Luftbeschaffungsvorrichtung (1) nach einem der vorherigen Ansprüche, einem Kompressor (8) und angeschlossenen Verbraucherkreisen (6-1, 6-2, 6-3, 6-4, 6-5).

14. Druckluftsystem (70) nach Anspruch 13, **dadurch gekennzeichnet, dass** nach Ausschalten des Kompressors und/oder des Fahrzeugs ein erster und/oder zweiter Regenerationsbetrieb in Abhängigkeit der Ausgabe des Umschalt-Steuersignals (S1) und eines Regenerations-Steuersignals S2 von einer Steuereinrichtung (5) einleitbar ist.

## Claims

1. Air provision apparatus (1) for a compressed air system (70) of a vehicle, the air provision apparatus (1) having:
a compressor connector (3-1) for connecting a compressor (8),
a first dryer device (10) and a second dryer device (12),
a switching valve device (14, 16) for connecting the first dryer device (10) to the compressor connector (3-1) for a first delivery mode or the second dryer device (12) to the compressor connector (3-1) for a second delivery mode,
a supply region (20, 34) for storing or receiving compressed air which is delivered by the dryer devices (10, 12),
a regeneration valve device (40, 22, 24) for regenerating the dryer devices (10, 12) by way of connection of the supply region (34) to a dryer outlet (10b, 12b) of the first dryer device (10) or second dryer device (12),
the switching valve device (14, 16) and the regeneration valve device (40, 22, 24) in each case having an electrically actuable solenoid valve (32, 40),
the air provision apparatus (1) having an electrically actuable compressor control valve (42) for the direct or indirect actuation of the compressor (8), the switching valve device (14, 16) having a first switching valve (14) and a second switching valve (16), it being possible for the first switching valve (14) to be actuated directly or indirectly by way of a switchover control signal (S1) in order to shut off the first dryer device (10) from the compressor connector (3-1) and/or for regenerating the first dryer device (10) in a first regeneration mode, **characterized in that**
the second switching valve (16) can be actuated by way of the dryer outlet (10b) of the first dryer device (10) for disconnecting the second dryer device (12) from the compressor connector (3-1) and/or for regenerating the second dryer device (12) in a second regeneration mode.

2. Air provision apparatus (1) according to Claim 1, **characterized in that**
a second regeneration mode can be set or not set during the first delivery mode, and
a first regeneration mode can be set or not set during the second delivery mode.

3. Air provision apparatus (1) according to Claim 1 or 2, **characterized in that** a switchover control signal (S1) is an electric control signal of a control device (5).

4. Air provision apparatus (1) according to one of the preceding claims, **characterized in that** it has an inlet block (3, 103, 203, 303, 403) with the two dryer devices (12, 14) and the switching valve device (14, 16), and a multiple-circuit protective valve block (4, 104, 204, 304, 404) with a multiple-circuit protective valve arrangement (36) for connecting a plurality of consumer circuits (6-1, 6-2, 6-3, 6-4, 6-5) to the supplying region (34), a regeneration valve (40) and a compressor control valve (42) being arranged in the multiple-circuit protective valve block (4, 104, 204, 304, 404).

5. Air provision apparatus (1) according to Claim 4, **characterized in that** merely pneumatically actuated valves are provided in the inlet block (203).

6. Air provision apparatus (1) according to Claim 4, **characterized in that** merely an electrically actuated pilot control valve (32) for actuating a pneumatic control input (14a) of the second switching valve (14) is provided as electric means in the inlet block (3, 103, 303).

7. Air provision apparatus (1) according to one of the preceding claims, **characterized in that** a first delivery mode and a second delivery mode can be carried out without regeneration one after the other.

8. Air provision apparatus (1) according to one of the preceding claims, **characterized in that** two regeneration paths are connected to the regeneration valve device (40), a first throttle (21) and a first check valve (22) being arranged upstream of the first dryer outlet (10b), and a second throttle (23) and a second check valve (24) being arranged upstream of the second dryer outlet (12b).

9. Air provision apparatus (1) according to Claim 1, **characterized in that** the first switching valve (14) has a pneumatic control input (14a) which is actuated by way of an electropneumatic pilot switching valve (32), in particular a 3/2-way valve, the electric control input (32a) of which receives the switchover control signal (S1) of the control device (5).

10. Air provision apparatus (1) according to Claim 1 or 9, **characterized in that** it has a first delivery check valve (17), which is provided between the first dryer outlet (10b) and the supply region (20, 34), for opening in the first delivery mode, and a second delivery check valve (18), which is provided between the second dryer outlet (12b) and the supply region (20, 34), for opening in the second delivery mode,
a first delivery region (37) being configured between the first dryer outlet (10b) and the first delivery check valve (17), and a second delivery region (38) being configured between the second dryer outlet (12b) and the second delivery check valve (18), a pneumatic control input (16a) of the second switching valve (16) being connected to the first delivery region (37).

11. Air provision apparatus (1) according to one of Claims 1, 9 and 10, **characterized in that** the first switching valve (14) and the second switching valve (16) are configured as 3/2-way valves for connecting the first or second dryer inlet (10a, 12a) to either the compressor connector (3.1) or an outlet line (29) to an air outlet (31).

12. Air provision apparatus (1) according to Claim 11, **characterized in that**, in their non-actuated basic position, the first switching valve (14) and the second switching valve (16) connect the compressor connector (3-1) in each case to the downstream dryer device (10, 12) and, in their actuated position, dock the downstream dryer device (10, 12) in each case to the outlet line (29).

13. Compressed air system (70) having an air provision apparatus (1) according to one of the preceding claims, a compressor (8) and connected consumer circuits (6-1, 6-2, 6-3, 6-4, 6-5).

14. Compressed air system (70) according to Claim 13, **characterized in that**, after the compressor and/or the vehicle are/is switched off, a first and/or second regeneration mode can be initiated in a manner which is dependent on the outputting of the switchover control signal (S1) and a regeneration control signal S2 by a control device (5).

## Revendications

1. Dispositif d'alimentation en air (1) pour un système d'air comprimé (70) d'un véhicule, dans lequel le dispositif d'alimentation en air (1) présente:
un raccord de compresseur (3-1) pour le raccordement d'un compresseur (8),
un premier dispositif de séchoir (10) et un second dispositif de séchoir (12),
un agencement de vanne de commutation (14, 16) pour le raccordement du premier dispositif de séchoir (10) au raccord de compresseur (3-1) pour un premier fonctionnement de transport ou du second dispositif de séchoir (12) au raccord de compresseur (3-1) pour un second fonctionnement de transport,
une zone de stockage (20, 34) pour l'accumulation ou le prélèvement d'air comprimé transporté à travers les dispositifs de séchoir (10, 12),
un agencement de vanne de régénération (40, 22, 24) pour régénérer les dispositifs de séchoir (10, 12) par raccordement de la zone de stockage (34) à une sortie de séchoir (10b, 12b) du premier dispositif de séchoir (10) ou du second dispositif de séchoir (12),
dans lequel l'agencement de vanne de commutation (14, 16) et l'agencement de vanne de régénération (40, 22, 24) présentent respectivement une électrovanne à commande électrique (32, 40),
dans lequel le dispositif d'alimentation en air (1) présente une vanne de commande de compresseur (42) à commande électrique pour la commande directe ou indirecte du compresseur (8), dans lequel l'agencement de vanne de commutation (14, 16) présente une première vanne de commutation (14) et une seconde vanne de commutation (16),
dans lequel la première vanne de commutation (14) peut être actionnée directement ou indirectement par un signal de commande d'inversion (S1) pour couper le premier dispositif de séchoir (10) du raccord de compresseur (3-1) et/ou pour régénérer le premier dispositif de séchoir (10) dans un premier fonctionnement de régénération,
**caractérisé en ce que** la seconde vanne de commutation (16) peut être actionnée par la sortie de séchoir (10b) du premier dispositif de séchoir (10) pour séparer le second dispositif de séchoir (12) du raccord de compresseur (3-1) et/ou pour régénérer le second dispositif de séchoir (12) dans un second fonctionnement de régénération.

2. Dispositif d'alimentation en air (1) selon la revendication 1, **caractérisé en ce qu'**un second fonctionnement de régénération est réglable ou n'est pas réglable pendant le premier fonctionnement de transport, et un premier fonctionnement de régénération est réglable ou n'est pas réglable pendant le second fonctionnement de transport.

3. Dispositif d'alimentation en air (1) selon la revendication 1 ou 2, **caractérisé en ce qu'**un signal de commande d'inversion (S1) est un signal de commande électrique d'un dispositif de commande (5).

4. Dispositif d'alimentation en air (1) selon l'une quelconque des revendications précédentes, **caractérisé en ce qu'**il présente un bloc d'entrée (3, 103, 203, 303, 403) avec les deux dispositifs de séchoir (12, 14) et l'agencement de vanne de commutation (14, 16) ainsi qu'un bloc de vanne de protection à circuits multiples (4, 104, 204, 304, 404) avec un agencement de vannes de protection à circuits multiples (36) pour le raccordement de plusieurs circuits de consommateurs (6-1, 6-2, 6-3, 6-4, 6-5) à la zone d'alimentation (34), dans lequel une vanne de régénération (40) et une vanne de commande de compresseur (42) sont disposées dans le bloc de vannes de protection à circuits multiples (4, 104, 204, 304, 404).

5. Dispositif d'alimentation en air (1) selon la revendication 4, **caractérisé en ce qu'**il est prévu dans le bloc d'entrée (203) uniquement des vannes à commande pneumatique.

6. Dispositif d'alimentation en air (1) selon la revendication 4, **caractérisé en ce qu'**il est prévu dans le bloc d'entrée (3, 103, 303) en tant que moyen électrique uniquement une vanne pilote à commande électrique (32) pour la commande d'une entrée de commande pneumatique (14a) de la seconde vanne de commutation (14).

7. Dispositif d'alimentation en air (1) selon l'une quelconque des revendications précédentes, **caractérisé en ce qu'**un premier fonctionnement de transport et un second fonctionnement de transport peuvent être exécutés l'un à la suite de l'autre sans régénération.

8. Dispositif d'alimentation en air (1) selon l'une quelconque des revendications précédentes, **caractérisé en ce que** deux chemins de régénération sont raccordés à l'agencement de vanne de régénération (40), dans lequel un premier étrangleur (21) et un premier clapet antiretour (22) sont disposés avant la première sortie de séchoir (10b) et un second étrangleur (23) et un second clapet antiretour (24) sont disposés avant la seconde sortie de séchoir (12b).

9. Dispositif d'alimentation en air (1) selon la revendication 1, **caractérisé en ce que** la première vanne de commutation (14) présente une entrée de commande pneumatique (14a), qui est commandée par une vanne pilote électropneumatique (32), en particulier une vanne à 3/2 voies, dont l'entrée de commande électrique (32a) reçoit le signal de commande d'inversion (S1) du dispositif de commande (5).

10. Dispositif d'alimentation en air (1) selon la revendication 1 ou 9, **caractérisé en ce qu'**il présente un premier clapet antiretour de transport (17) prévu entre la première sortie de séchoir (10b) et la zone de stockage (20, 34) pour l'ouverture dans le premier fonctionnement de transport et un second clapet antiretour de transport (18) prévu entre la seconde sortie de séchoir (12b) et la zone de stockage (20, 34) pour l'ouverture dans le second fonctionnement de transport,
dans lequel une première zone de transport (37) est formée entre la première sortie de séchoir (10b) et le premier clapet antiretour de transport (17) et une seconde zone de transport (38) est formée entre la seconde sortie de séchoir (12b) et le second clapet antiretour de transport (18), dans lequel une entrée de commande pneumatique (16a) de la seconde vanne de commutation (16) est raccordée à la première zone de transport (37).

11. Dispositif d'alimentation en air (1) selon l'une quelconque des revendications 1, 9 ou 10, **caractérisé en ce que** la première vanne de commande (14) et la seconde vanne de commande (16) sont constituées par des vannes à 3/2 voies pour relier la première et la seconde entrées de séchoir (10a, 12a) soit au raccord de compresseur (3.1) soit à une conduite de sortie (29) vers une sortie d'air (31).

12. Dispositif d'alimentation en air (1) selon la revendication 11, **caractérisé en ce que** la première vanne de commutation (14) et la seconde vanne de commutation (16) raccordent dans leur position de base non actionnée le raccord de compresseur (3-1) respectivement au dispositif de séchoir qui suit (10, 12) et connectent dans leur position actionnée le dispositif de séchoir qui suit (10, 12) respectivement à la conduite de sortie (29).

13. Système d'air comprimé (70) avec un dispositif d'alimentation en air (1) selon l'une quelconque des revendications précédentes, un compresseur (8) et des circuits de consommateurs raccordés (6-1, 6-2, 6-3, 6-4, 6-5).

14. Système d'air comprimé (70) selon la revendication 13, **caractérisé en ce qu'**après l'arrêt du compresseur et/ou du véhicule, on peut lancer un premier et/ou un second fonctionnement de régénération en fonction de l'émission du signal de commande d'inversion (S1) et d'un signal de commande de régénération S2 par un dispositif de commande (5).
